# FASCICULE DE BREVET EUROPEEN

(11) **EP 4 418 527 B1**
(45) Date de publication et mention de la délivrance du brevet: **21.10.2026**
(21) Numéro de dépôt: 24157380.7
(22) Date de dépôt: 13.02.2024
(51) Int. Cl.: H02P 23/00, H02P 27/04

(54) **PROCÉDÉ ET SYSTÈME DE CONTRÔLE DE LA CONNEXION D'UNE MACHINE ÉLECTRIQUE À UN RÉSEAU ÉLECTRIQUE VIA UN CONTACTEUR DE BYPASS**
VERFAHREN UND SYSTEM ZUR STEUERUNG DER VERBINDUNG EINER ELEKTRISCHEN MASCHINE MIT EINEM STROMNETZ ÜBER EINEN BYPASS-SCHALTER
METHOD AND SYSTEM FOR CONTROLLING THE CONNECTION OF AN ELECTRIC MACHINE TO AN ELECTRIC NETWORK VIA A BYPASS CONTACTOR

(30) Priorité: 16.02.2023 FR 2301441
(43) Date de publication de la demande: 21.08.2024
(73) Titulaire: Moteurs Leroy-Somer, 16915 Angouleme Cedex 9 (FR)
(72) Inventeur: ZAIDI, Bilel, 16730 FLEAC (FR); TIENTCHEU YAMDEU, Mathias, 16000 ANGOULÊME (FR); DENIS, Fabien, 16360 REIGNAC (FR); DERUAS, Cedrick, 16730 LINARS (FR)
(74) Mandataire: Ipsilon

(56) Documents cités:
- EP-A1- 1 746 700
- WO-A1-2017/074508
- US-B1- 6 295 215

## Description

### Domaine technique

La présente invention concerne le domaine de l'électronique de puissance, et concerne plus particulièrement une technique de contrôle de la connexion d'une machine électrique à un réseau électrique via un contacteur de bypass et du fonctionnement d'un convertisseur par lequel la machine est reliée au réseau, appelée dans la suite technique de bypass.

### Technique antérieure

Plusieurs techniques de bypass existent dans la littérature dans un but d'économie de l'énergie, en vue notamment de répondre à des normes environnementales de plus en plus sévères. Chaque pourcent d'amélioration de l'efficacité énergétique peut entraîner un gain substantiel.

US2012/0187886 décrit une méthode de bypass dans un système comportant un variateur de vitesse alimentant un moteur électrique, le variateur étant lui-même alimenté par un réseau électrique, et deux contacteurs : un contacteur à la sortie du variateur et un contacteur dit de bypass qui relie le moteur au réseau lorsqu'il est fermé. Après la synchronisation de la tension de sortie du variateur avec celle du réseau électrique, le contacteur à la sortie du variateur s'ouvre puis le contacteur de bypass se ferme. Il y a donc un temps de « blackout » pouvant atteindre les 5 secondes pendant lequel le moteur n'est alimenté ni par le variateur, ni par le réseau électrique. Quand le moteur est à sa charge nominale, une perte de couple importante est possible, ce qui induit un très fort appel de courant au moment du basculement de l'alimentation par le variateur vers l'alimentation par le réseau.

US8014110 divulgue une méthode de bypass qui, contrairement à la méthode décrite dans US2012/0187886, ne nécessite qu'un seul contacteur, celui de bypass, et est exclusivement applicable dans le cas d'un variateur à redresseur actif (pas de redresseur à thyristors). Cette méthode consiste à synchroniser le moteur avec le réseau, fermer le contacteur de bypass, puis arrêter l'onduleur du variateur.

Une telle méthode requiert obligatoirement des éléments de filtrage à la sortie de l'onduleur afin d'absorber les fronts de commutation. Elle ne peut pas être appliquée telle qu'elle est présentée à un variateur avec un pont d'entrée passif mixte (à diodes et thyristors) sans surdimensionner les éléments de filtrage pour protéger les thyristors de la casse en réduisant les fronts de tension à la sortie de l'onduleur.

La demande WO 2017/074508 divulgue un système comportant un variateur de fréquence couplé en entrée à une source d'alimentation et en sortie à un moteur, ainsi qu'un interrupteur configuré pour coupler la source d'alimentation au moteur en bypassant le variateur de fréquence grâce à un circuit de contrôle. L'instant de bypass est détecté sur la base du courant à la sortie du variateur.

D'autres méthodes de bypass existent dans la littérature. Certaines reposent sur l'installation des contacteurs en amont du variateur. Ceci permet de déconnecter le redresseur à thyristors du réseau avant le bypass. Néanmoins, afin d'assurer la continuité du service, un surdimensionnement excessif du bus DC est inévitable afin de fournir l'énergie nécessaire au moteur pendant le blackout. Il est à noter que ceci n'empêche pas une forte surintensité du réseau au moment du bypass à cause du court-circuit entre phases qui apparaît à la sortie de l'onduleur.

D'autres méthodes se basent sur le remplacement du pont mixte par un redresseur à diodes, connu pour être plus robuste face aux variations de la tension en fonction du temps, et ce, avec l'ajout d'éléments de filtrage des deux côtés du variateur (méthode similaire à celle décrite dans US8014110). Cette technique assure la sécurité du variateur avec un surcoût non négligeable et une modification de la structure du variateur initialement conçu avec un pont mixte.

### Exposé de l'invention

Il existe donc un besoin pour améliorer les méthodes de bypass de l'art antérieur, notamment en termes de perturbation du réseau et/ou pour diminuer le coût des équipements.

### Procédé de bypass

L'invention vise à répondre à cet objectif et a pour objet, selon l'un de ses aspects, un procédé de contrôle de la connexion d'une machine électrique à un réseau électrique via un contacteur de bypass et du fonctionnement d'un convertisseur par lequel la machine est reliée au réseau, à partir d'un état où la machine est reliée au réseau via le convertisseur sans que la tension de sortie de ce dernier ne soit synchronisée avec celle du réseau, le procédé comportant :
a) la commande du convertisseur pour synchroniser la tension de sortie de celui-ci avec celle du réseau ;
b) la commande du contacteur pour relier la machine au réseau via le contacteur ;
c) la commande du convertisseur suite à une détection de l'instant où le contacteur se ferme, afin d'interrompre son fonctionnement.

La fermeture du contacteur de bypass avant l'arrêt du convertisseur garantit la continuité du service (absence de temps de blackout) sans aucun appel excessif du courant au moment de la transition de l'alimentation par le convertisseur vers l'alimentation par le réseau, ce qui permet de réduire la perturbation du réseau.

De plus, le procédé selon l'invention ne nécessite aucun filtrage à la sortie du convertisseur, ni de protection des composants semi-conducteurs de ce dernier par des éléments passifs supplémentaires, ni même de surdimensionnement de composants appartenant au réseau, tels que des inductances, ce qui permet de réduire le coût des équipements.

La synchronisation de la tension de sortie du convertisseur avec celle du réseau consiste à annuler le déphasage entre la tension de sortie du convertisseur et celle du réseau lorsque la fréquence de la machine égale celle du réseau.

La détection de l'instant où le contacteur se ferme comprend la mesure d'au moins un courant circulant à travers le contacteur fermé, l'instant où le contacteur se ferme étant détecté lorsque la valeur absolue de l'intensité du courant est supérieure ou égale à un seuil prédéfini, ce seuil étant préférentiellement supérieur au plancher de bruit de la chaîne de mesure.

De préférence, le réseau électrique est triphasé.

L'instant où le contacteur se ferme est alors préférentiellement détecté lorsque la valeur absolue de l'intensité maximale du courant dans l'une des trois phases circulant à travers le contacteur fermé est supérieure ou égale au seuil prédéfini.

Dans un mode de réalisation, le convertisseur comporte un onduleur relié à la machine et comprenant des ponts de transistors en H.

La machine électrique peut être une génératrice.

Alternativement, la machine électrique est une charge tournante ou passive, notamment un moteur électrique ou un accumulateur d'énergie cinétique.

Le convertisseur peut être un variateur de vitesse comportant un redresseur DC par l'intermédiaire duquel le réseau est relié à l'onduleur.

Le redresseur peut être passif mixte à diodes et interrupteurs commandés, notamment des thyristors.

L'étape c) peut comporter le blocage des transistors de l'onduleur, notamment par la coupure des signaux de contrôle des grilles de ces transistors, étant par exemple des signaux PWM. De préférence, le ratio entre le délai de traitement de l'ordre d'arrêt du convertisseur et la période de découpage du convertisseur est inférieur à 0,5, mieux inférieur à 0,2, encore mieux inférieur à 0,1 ; par exemple le délai de traitement de l'ordre d'arrêt du convertisseur est inférieur à 50 µs pour une fréquence de découpage du convertisseur inférieure à 10 kHz.

### Système de bypass

L'invention a encore pour objet, selon un autre de ses aspects, un système de contrôle de la connexion d'une machine électrique à un réseau électrique via un contacteur de bypass et du fonctionnement d'un convertisseur par lequel la machine est reliée au réseau, à partir d'un état où la machine est reliée au réseau via le convertisseur sans que la tension de sortie de ce dernier ne soit synchronisée avec celle du réseau, le système étant agencé pour :
- commander le convertisseur pour synchroniser la tension de sortie de celui-ci avec celle du réseau ;
- commander le contacteur pour relier la machine au réseau via le contacteur ;
- commander le convertisseur suite à une détection de l'instant où le contacteur se ferme, afin d'interrompre son fonctionnement.

Un tel système peut être utilisé pour la mise en œuvre du procédé selon l'invention tel que défini plus haut.

### Installation de bypass

L'invention a également pour objet, selon un autre de ses aspects, une installation électrique comportant le système de bypass selon l'invention, le convertisseur et le contacteur. L'installation peut comporter la machine électrique.

L'invention a aussi pour objet, selon un autre de ses aspects, l'utilisation du système de bypass selon l'invention pour la mise en œuvre du procédé de bypass selon l'invention.

### Brève description des dessins

L'invention pourra être mieux comprise à la lecture de la description détaillée qui va suivre, d'exemples non limitatifs de mise en œuvre de celle-ci, et à l'examen du dessin annexé, sur lequel :
[Fig 1] La figure 1 est une vue schématique d'un exemple d'installation électrique selon l'invention ;
[Fig 2] la figure 2 est un schéma illustrant un exemple de déroulement de l'étape a) du procédé selon l'invention ;
[Fig 3] la figure 3 est un schéma d'un exemple de circuit électronique mettant en œuvre l'étape c) du procédé selon l'invention ;
[Fig 4] la figure 4 est un ensemble de chronogrammes des signaux intervenant lors de la fermeture du contacteur ;
[Fig 5] la figure 5 représente schématiquement les résultats de la validation expérimentale en termes notamment de courbes de tension pour un taux de charge du variateur à environ 20% ;
[Fig 6] la figure 6 représente schématiquement les résultats de la validation expérimentale en termes de courbes de courant pour un taux de charge du variateur à environ 20% ;
[Fig 7] la figure 7 représente deux courbes de courant extraites de la figure 6 ;
[Fig 8] la figure 8 représente schématiquement les résultats de la validation expérimentale en termes notamment de courbes de tension pour un taux de charge du variateur à environ 50% ;
[Fig 9] la figure 9 représente schématiquement les résultats de la validation expérimentale en termes de courbes de courant pour un taux de charge du variateur à environ 50% ;
[Fig 10] la figure 10 représente deux courbes de courant extraites de la figure 9 ;
[Fig 11] la figure 11 représente schématiquement les résultats de la validation expérimentale en termes notamment de courbes de tension pour un taux de charge du variateur à environ 80% ;
[Fig 12] la figure 12 représente schématiquement les résultats de la validation expérimentale en termes de courbes de courant pour un taux de charge du variateur à environ 80% ;
[Fig 13] la figure 13 représente deux courbes de courant extraites de la figure 12 ; et
[Fig 14] la figure 14 illustre le déroulement du cyclage dans l'exemple servant à la validation du procédé selon l'invention.

### Description détaillée

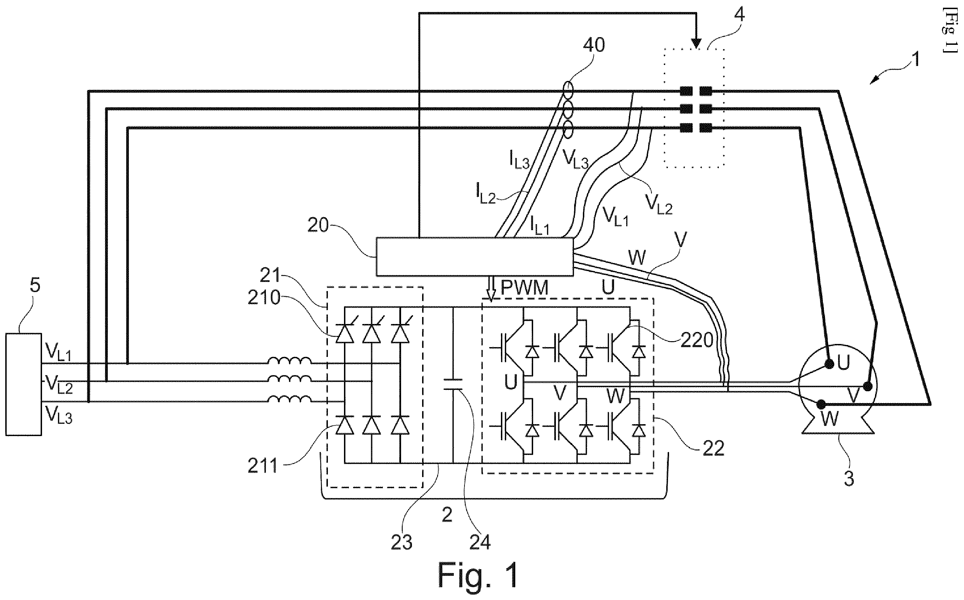

On a illustré schématiquement à la figure 1 un exemple d'installation électrique 1 selon l'invention. Cette installation 1 comporte un système 20, selon l'invention, de contrôle de la connexion d'une machine électrique 3 à un réseau électrique 5 via un contacteur de bypass 4 et du fonctionnement d'un convertisseur 2 par lequel la machine 3 est reliée au réseau 5, à partir d'un état où la machine 3 est reliée au convertisseur 2 sans que la tension de sortie de ce dernier ne soit synchronisée avec celle du réseau 5.

Le système 20 est configuré pour mettre en œuvre le procédé selon l'invention.

Dans cet exemple, la machine électrique 3 est un moteur. Cela peut être un moteur asynchrone destiné à l'entraînement de compresseurs, pompes, ventilateurs ou à la propulsion de navires.

Le réseau électrique 5 est, dans cet exemple, triphasé L1, L2, L3, par exemple 400 V 50 Hz ou 60 Hz.

Le contacteur de bypass 4 peut être un relais électromécanique mais dans une variante, il peut être à semi-conducteurs.

Le convertisseur 2 est, dans cet exemple, un variateur de vitesse à fréquence variable (encore appelé VSD) relié en entrée au réseau L1, L2 et L3.

Le convertisseur 2 comprend un redresseur DC 21 (convertisseur AC/DC), un bus DC 23, un filtre de bus conventionnel 24 et un onduleur 22 (convertisseur DC/AC).

Dans cet exemple, le redresseur 21 est passif mixte à diodes 211 et thyristors 210.

L'onduleur 22 comprend des ponts de transistors IGBT 220 en H dont les grilles sont commandées par des signaux PWM générés par le système 20.

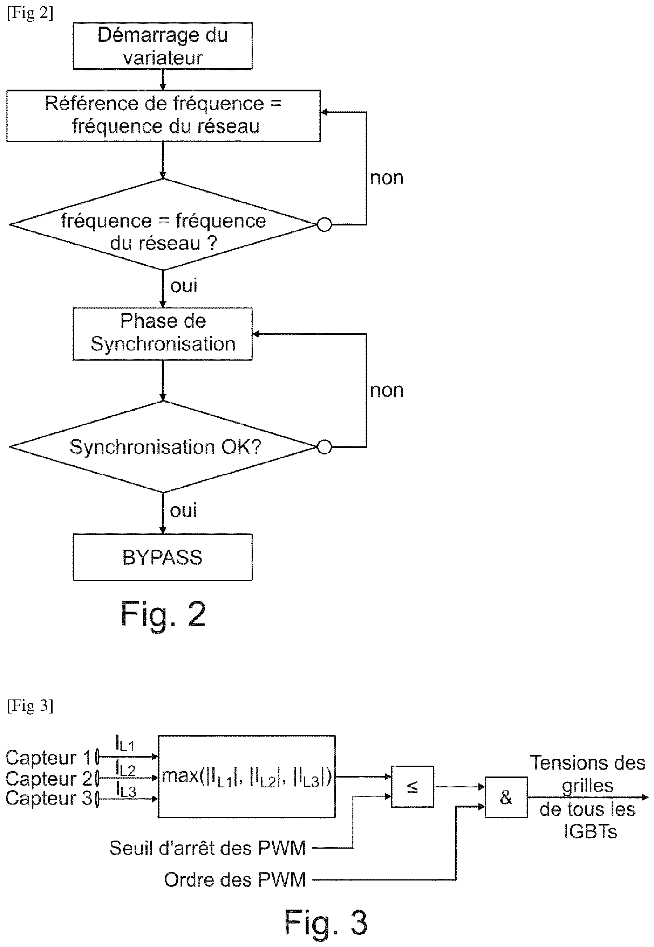

Pour mettre en œuvre le procédé selon l'invention, le système 20 commande à l'étape a) le variateur 2 dans le but de synchroniser la tension de sortie de celui-ci avec celle du réseau 5. Les sous-étapes de l'étape a), dite de pré-bypass, sont schématisées à la figure 2.

Plusieurs techniques de synchronisation sont présentées dans la littérature. Celle adoptée dans l'exemple consiste à démarrer le moteur 3 avec le variateur 2 sans synchronisation. Une fois la fréquence du moteur égale celle du réseau, une régulation permet d'annuler le déphasage entre la tension du réseau et celle à la sortie du variateur.

Lorsque la synchronisation est effectuée, la phase de bypass peut commencer.

A l'étape b), le système 20 commande le contacteur 4 pour relier le moteur 3 directement au réseau 5 via le contacteur 4.

Une fois ce contacteur fermé, un court-circuit entre les phases du réseau tend à apparaître entre un ou plusieurs IGBT et une ou plusieurs diodes de roue libre de phases différentes de l'onduleur. Le nombre de semi-conducteurs impliqués dans ce court-circuit dépend de l'instant de fermeture du contacteur par rapport à la forme d'onde sinusoïdale du courant de sortie. Si l'onduleur n'était pas arrêté rapidement, le courant continuerait de monter jusqu'à la désaturation des IGBT ainsi que le déclenchement des protections du variateur contre les surintensités (matérielle et/ou logicielle).

Aucune casse de l'onduleur ne serait due à cette montée du courant. Cependant, le fait que l'onduleur 22 continue de commuter induit une sollicitation excessive au niveau des gâchettes des thyristors 210 qui subissent le découpage de l'onduleur 22. Ce découpage induit naturellement la casse de ces thyristors.

Le procédé selon l'invention repose sur la détection de l'instant où le contacteur 4 se ferme. Cette détection permet d'arrêter la commutation des IGBT 220 avant la casse des thyristors 210 (étape c) du procédé).

Pour cela, des capteurs de courants 40 sont installés sur les câbles du réseau en amont du contacteur 4. Une fois ce dernier fermé, la montée du courant est détectée par un circuit électronique dont le schéma de principe est présenté à la figure 3. La valeur absolue maximale des intensités des courants I_{L1}, I_{L2}, I_{L3} correspondant aux trois phases circulant à travers le contacteur 4 fermé est comparée à un seuil prédéfini. Lorsque ce seuil est franchi, un ordre d'inhiber toutes les commandes PWM des transistors IGBT 220 est donné. Le niveau du seuil prédéfini est déterminé de façon qu'il soit très bas (pour une réaction rapide) mais suffisamment haut comparativement au plancher de bruit de la chaîne de mesure. Dans la validation expérimentale dont les résultats sont exposés plus loin, le seuil prédéfini a été fixé à 50A pour un onduleur dont le courant nominal est d'environ 140A.

L'avantage du procédé selon l'invention est l'absence d'un temps de blackout pour la machine électrique, avec un seul contacteur, sans filtrage en sortie de l'onduleur, ni surdimensionnement de filtrage à l'entrée du redresseur. En effet, la machine 3 continue de voir l'énergie électrique arriver de la part de l'onduleur 2 jusqu'à la fin de la fermeture du contacteur de bypass 4. Ceci est possible grâce au temps de réaction très rapide de la chaîne de détection du seuil du courant qui interrompt le fonctionnement de l'onduleur 2 dès la montée du courant en amont du contacteur. Le nombre de commutations vues par les thyristors est donc limité.

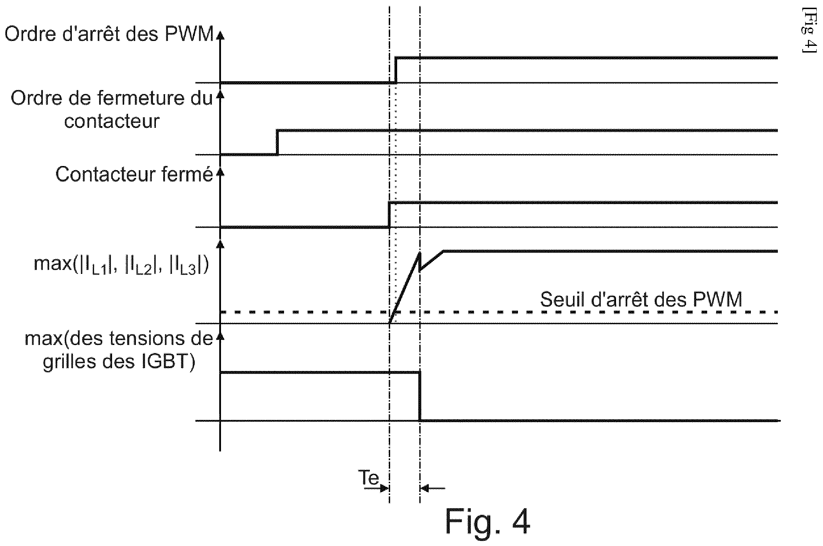

Il convient de s'assurer que le temps de traitement de l'ordre de coupure des signaux PWM soit largement inférieur à la période de découpage de l'onduleur 2. Pour la validation expérimentale (voir plus loin), ce retard est égal à 42µs pour une fréquence de découpage de 3 kHz. Le chronogramme du déroulement du bypass est présenté à la figure 4, Te étant le temps de traitement de coupure des signaux PWM.

Quand l'utilisateur souhaite changer la vitesse du moteur, l'onduleur peut prendre la relève en toute sécurité selon les méthodes déjà publiées dans la littérature.

### Exemple

La validation expérimentale du procédé selon l'invention a été effectuée avec un variateur à pont mixte passif (diodes et thyristors) en entrée, le POWERDRIVE MD SMART MD3 75T alimentant un moteur asynchrone LS 400V de 90kW. Ce moteur entraîne une machine synchrone qui injecte l'énergie électrique dans le réseau à travers un variateur POWERDRIVE FX 100T.

Ce banc d'essai permet de valider expérimentalement le procédé selon l'invention jusqu'à environ 80% de la charge nominale de l'équipement sous test (MD3 75T).

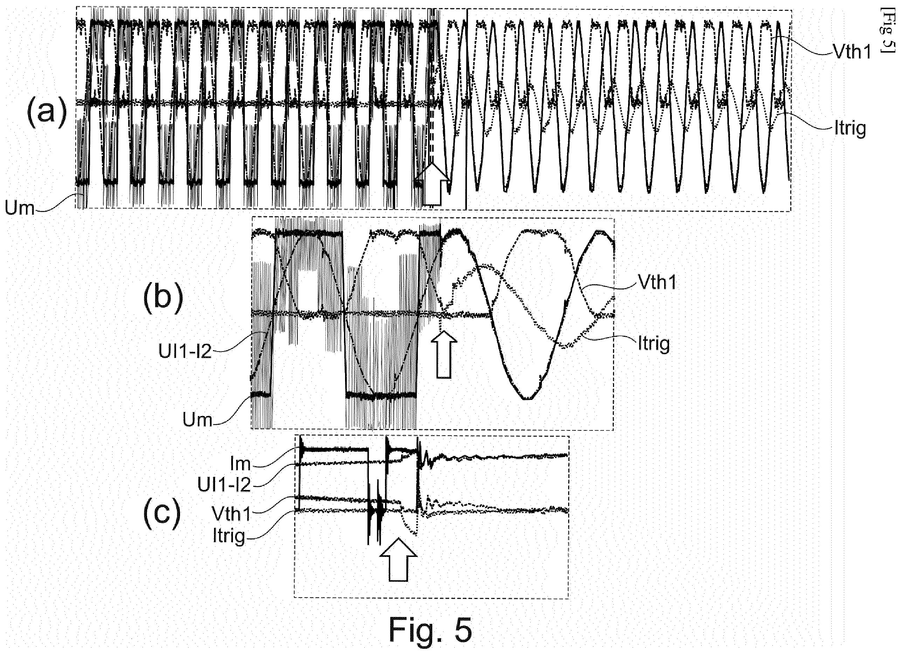

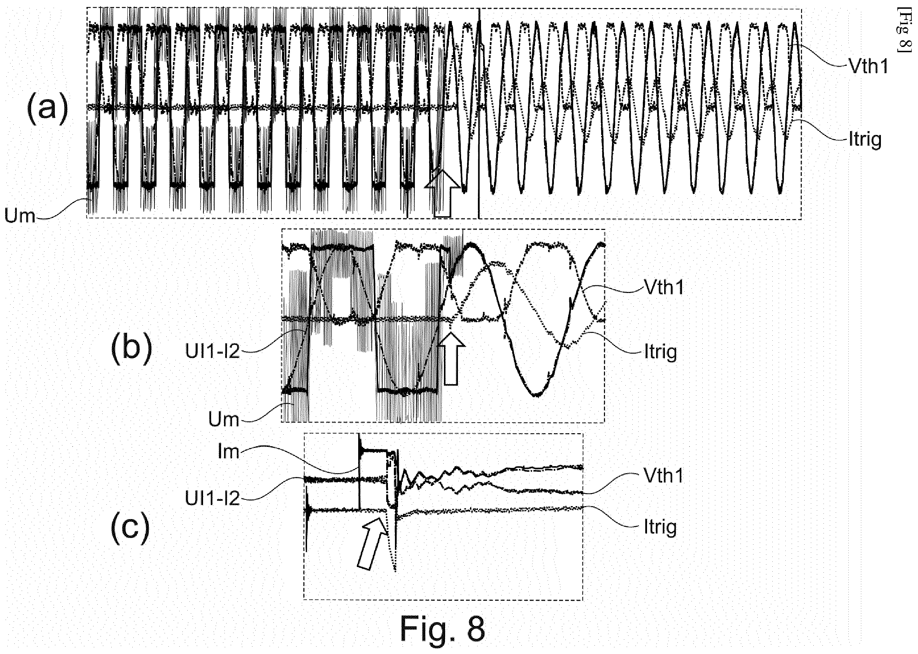

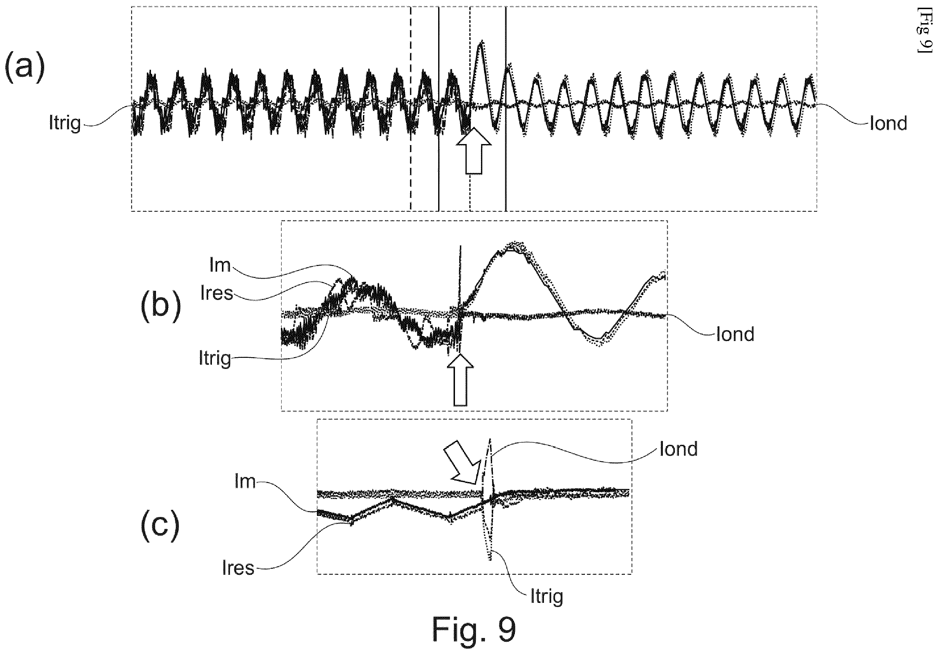

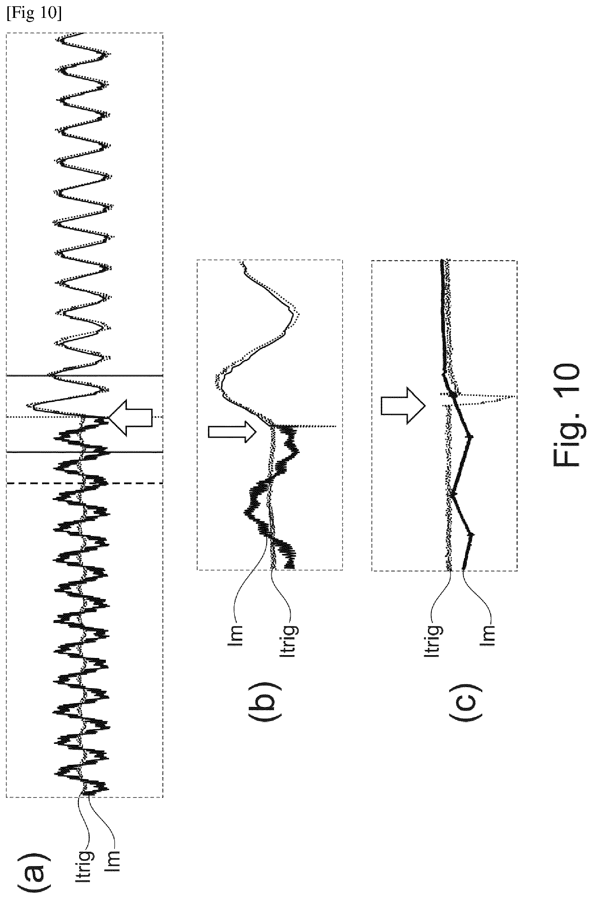

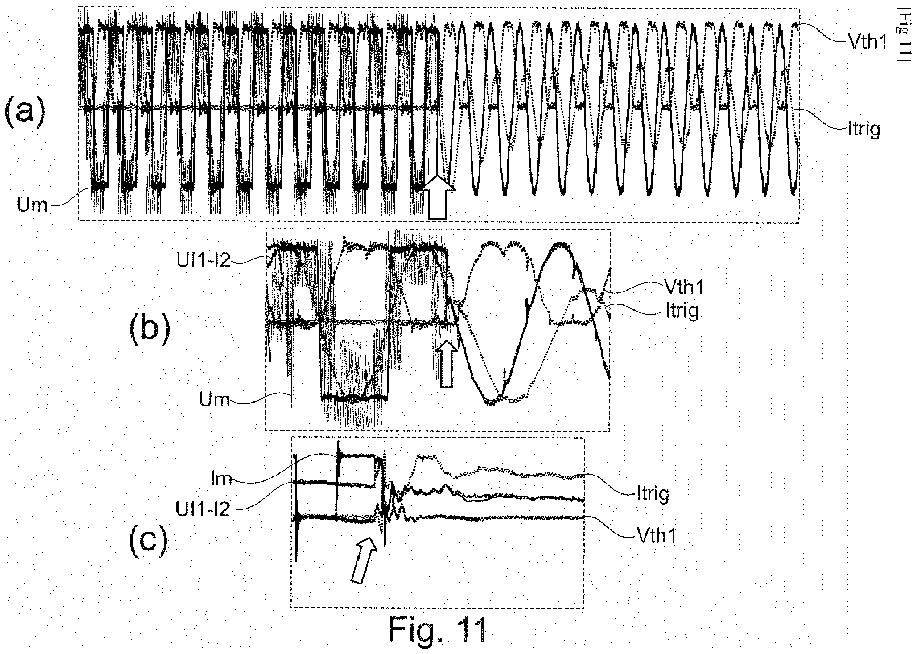

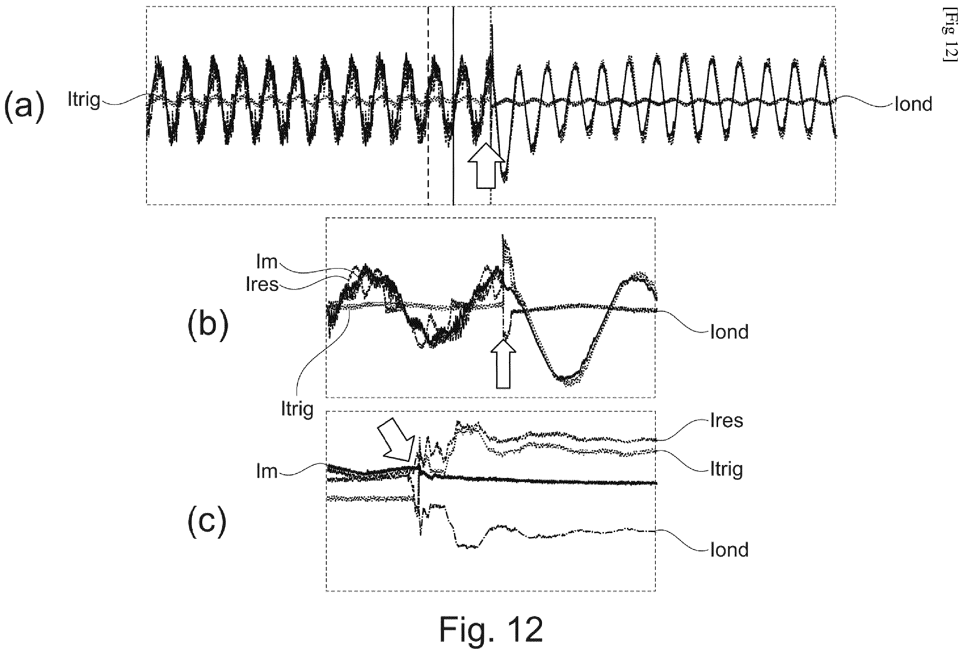

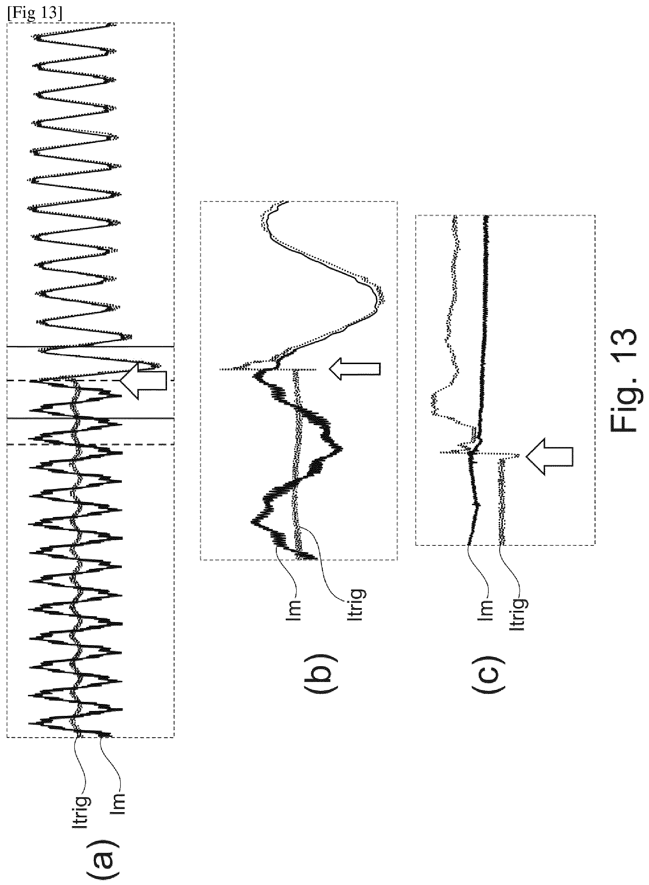

Les formes d'onde des résultats de la validation expérimentale sont illustrées aux figures 5 à 13 avec différentes valeurs de taux de charge du variateur de vitesse:
- environ 20% de charge pour les figures 5 à 7,
- environ 50% de charge pour les figures 8 à 10, et
- environ 80% de charge pour les figures 11 à 13.

Le taux de charge d'un variateur de vitesse se définit comme étant la proportion de la puissance nominale du moteur qui est fournie par le variateur.

Toutes les mesures de la validation expérimentale ont été effectuées par rapport à la phase L1 du réseau.

Les figures 5 à 13 représentent schématiquement les formes d'onde de différentes grandeurs physiques concernées par le procédé de bypass.

Les figures 5, 8 et 11 illustrent les courbes du courant circulant à travers le contacteur I_{trig}, de la tension réseau Uₗ₁₋ₗ₂, de la tension moteur Uₘ et de la tension aux bornes d'un thyristor de la phase L1 Vₜₕ₁.

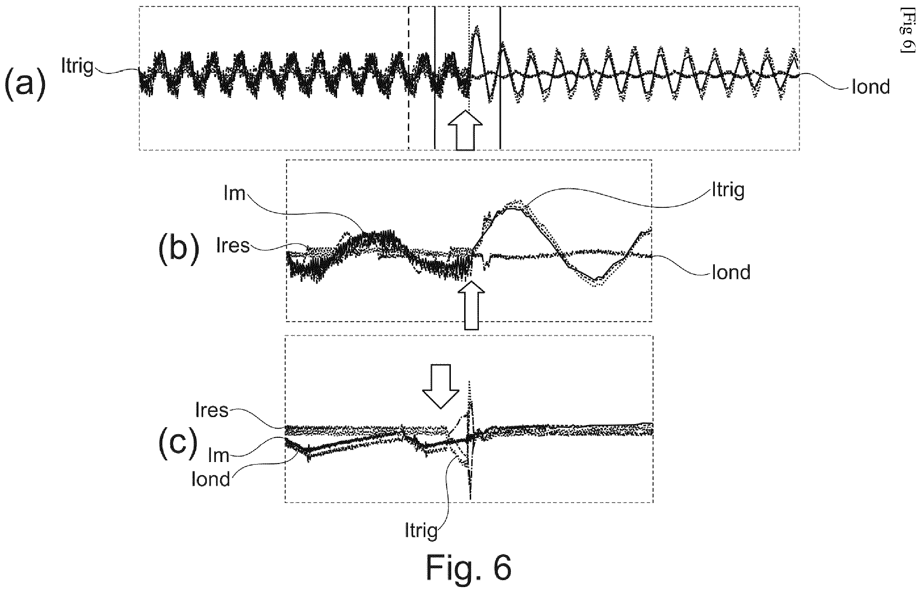

Les figures 6, 9 et 12 représentent les courbes les courbes du courant circulant à travers le contacteur I_{trig}, du courant en sortie de l'onduleur I_{and}, courant moteur Iₘ et du courant réseau de la phase L1 Iᵣₑₛ.

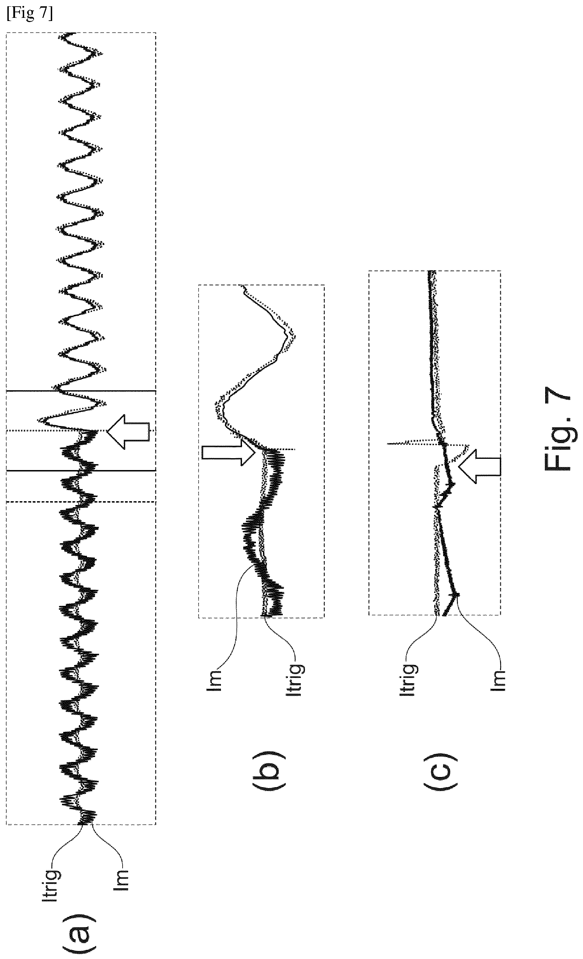

Les figures 7, 10 et 13 illustrent les courbes du courant circulant à travers le contacteur I_{trig} et du courant moteur Iₘ.

Les flèches sur les figures 5 à 13 indiquent la phase de transition de l'alimentation par le variateur vers l'alimentation par le réseau.

Les vues (b) et (c) sur chacune des figures 5 à 11 sont un agrandissement des vues (a) d'un facteur de 10 et de 500 pour l'échelle des temps, respectivement, autour de ladite phase de transition.

On remarque, notamment sur les vues (b) et (c) de chacune des figures 5 à 13 que le courant I_{trig} est nul avant l'instant du bypass. Les oscillations visuelles du courant Itrig avant l'instant de bypass sur les figures 6(a), 9(a) et 12(a) sont dues à la précision des sondes de courant expérimentales utilisées (Rogowski). En effet, la sonde utilisée pour la mesure du courant Itrig de l'ordre de 100A est de calibre 6000A.

Sur chacune des figures 5 à 13, on remarque, notamment sur la courbe du courant moteur Iₘ, que le moteur continue de fonctionner, sans qu'il n'y ait un temps de blackout.

De plus, aucune casse des thyristors n'apparaît d'après la courbe de la tension aux bornes d'un thyristor de la phase L1 Vₜₕ₁.

En effet, le réseau est protégé dans cet exemple avec des fusibles UR de 500A et le variateur avec des fusibles UR 350A. Si l'un des thyristors était cassé (en circuit fermé), un court-circuit entre phases réseau serait immédiatement apparu dans la forme d'onde Vₜₕ₁ mesurée aux bornes du thyristor, mais ce n'est pas le cas. Ce résultat valide alors le procédé de bypass selon l'invention.

On note ici que la charge n'est pas concernée par le court-circuit entre phases qui apparaît au moment du bypass au niveau de l'onduleur. En effet, les courbes montrent bien que, lorsque le courant I_{trig} commence à augmenter (effet du court-circuit) à cause de la fermeture du contacteur, le courant moteur Iₘ, quant à lui, reste stable et ne subit aucune augmentation rapide du courant.

Cependant, les résultats obtenus montrent aussi l'existence d'une ondulation du courant moteur au moment du bypass. Elle est probablement due aux imperfections liées à la synchronisation de la tension moteur par rapport à celle du réseau ainsi qu'à la différence entre les valeurs efficaces de ces deux tensions à cause de la présence d'une inductance de ligne à l'entrée du variateur. En effet, plus la charge est grande, plus la différence entre ces tensions est grande et plus l'ondulation est importante.

Il est à noter que, malgré tout, pour les différents niveaux de courant moteur, l'ondulation reste faible et ne dure qu'une période grâce à la continuité d'alimentation du moteur qui ne subit aucun blackout pendant le bypass.

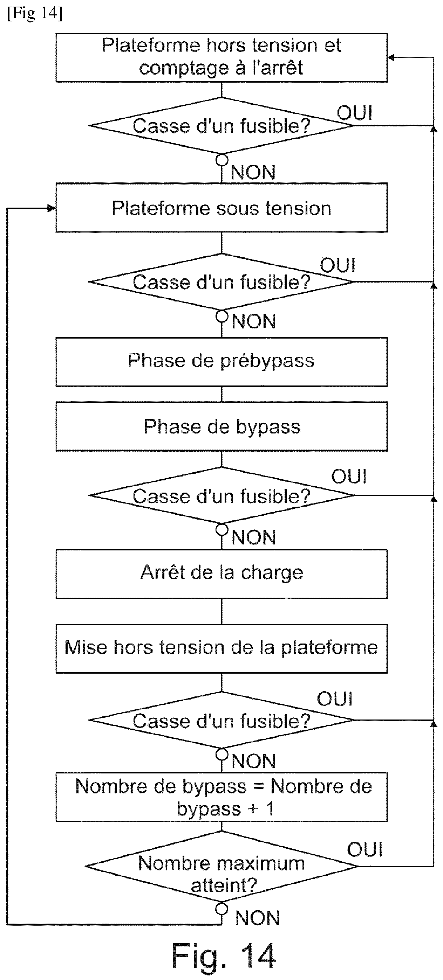

Le déroulement du cyclage du procédé selon l'invention suit l'organigramme de la figure 14.

Le cyclage consiste à vérifier la robustesse du procédé de bypass selon l'invention. Pour cela, un système automatisé peut être mis en place afin d'effectuer un nombre de bypass suffisant sans aucune panne dans le variateur. Chaque cycle de bypass dure environ 5 minutes afin de permettre aux différents composants du variateur de rétablir leurs états initiaux.

Le choix du nombre maximum de bypass est fixé en se basant sur l'hypothèse suivante: *« Tout au long de la durée de vie du variateur, un bypass par semaine sera effectué ».* Ainsi, pour une durée de vie du variateur de 40 ans, le nombre maximal de bypass serait d'environ 2000. Une fois le cyclage terminé, aucune anomalie n'a été détectée dans le variateur. Tous les semi-conducteurs sont restés fonctionnels.

L'invention concerne toutes les applications industrielles impliquant des process continus et/ou concernant la production / conversion d'énergie.

L'invention n'est pas limitée à l'exemple de réalisation décrit ci-dessus. La machine électrique peut par exemple être une génératrice ou un accumulateur cinétique. De même, les transistors de puissance peuvent être d'autre type que des IGBT, par exemple des MOSFET.

## Revendications

1. Procédé de contrôle de la connexion d'une machine électrique (3) à un réseau électrique (5) via un contacteur de bypass (4) et du fonctionnement d'un convertisseur (2) par lequel la machine (3) est reliée au réseau (5), à partir d'un état où la machine (3) est reliée au réseau via le convertisseur (2) sans que la tension de sortie de ce dernier ne soit synchronisée avec celle du réseau (5), le procédé comportant :
a) la commande du convertisseur (2) pour synchroniser la tension de sortie de celui-ci avec celle du réseau (5) ;
b) la commande du contacteur (4) pour relier la machine (3) au réseau (5) via le contacteur (4) ;
c) la commande du convertisseur (2) suite à une détection de l'instant où le contacteur (4) se ferme, afin d'interrompre son fonctionnement
**caractérisé en ce que** la détection de l'instant où le contacteur (4) se ferme comprend la mesure d'au moins un courant (I_{L1}, I_{L2}, I_{L3}) circulant à travers le contacteur (4) fermé, l'instant où le contacteur (4) se ferme étant détecté lorsque la valeur absolue de l'intensité du courant (I_{L1}, I_{L2}, I_{L3}) est supérieure ou égale à un seuil prédéfini, ce seuil étant préférentiellement supérieur au plancher de bruit de la chaîne de mesure.

2. Procédé selon la revendication précédente, le réseau électrique (5) étant triphasé.

3. Procédé selon les deux revendications précédentes, l'instant où le contacteur (4) se ferme étant détecté lorsque la valeur absolue de l'intensité maximale du courant (I_{L1}, I_{L2}, I_{L3}) dans l'une des trois phases circulant à travers le contacteur (4) fermé est supérieure ou égale au seuil prédéfini.

4. Procédé selon l'une quelconque des revendications précédentes, le convertisseur (2) comportant un onduleur (22) relié à la machine (3) et comprenant des ponts de transistors (220) en H.

5. Procédé selon l'une quelconque des revendications précédentes, la machine (3) étant une génératrice.

6. Procédé selon l'une quelconque des revendications 1 à 4, la machine (3) étant une charge tournante ou passive, notamment un moteur électrique ou un accumulateur d'énergie cinétique.

7. Procédé selon la revendication précédente dans son rattachement à la revendication 4, le convertisseur (2) étant un variateur de vitesse comportant un redresseur DC (21) par l'intermédiaire duquel le réseau est relié à l'onduleur (22).

8. Procédé selon la revendication précédente, le redresseur (21) étant passif mixte à diodes (211) et interrupteurs commandés, notamment des thyristors (210).

9. Procédé selon la revendication 4 ou l'une quelconque des revendications 5 à 8 dans son rattachement à la revendication 4, l'étape c) comportant le blocage des transistors (220) de l'onduleur (22), notamment par la coupure des signaux de contrôle des grilles de ces transistors, étant par exemple des signaux PWM.

10. Procédé selon l'une quelconque des revendications précédentes, le ratio entre le délai de traitement de l'ordre d'arrêt du convertisseur (2) et la période de découpage du convertisseur (2) étant inférieur à 0,5, mieux inférieur à 0,2, encore mieux inférieur à 0,1, et de préférence le délai de traitement de l'ordre d'arrêt du convertisseur (2) est inférieur à 50 µs pour une fréquence de découpage du convertisseur (2) inférieure à 10 kHz.

11. Système (20) de contrôle de la connexion d'une machine électrique (3) à un réseau électrique (5) via un contacteur de bypass (4) et du fonctionnement d'un convertisseur (2) par lequel la machine (3) est reliée au réseau (5), à partir d'un état où la machine (3) est reliée au réseau via le convertisseur (2) sans que la tension de sortie de ce dernier ne soit synchronisée avec celle du réseau (5), le système (20) étant agencé pour :
- commander le convertisseur (2) pour synchroniser la tension de sortie de celui-ci avec celle du réseau (5) ;
- commander le contacteur (4) pour relier la machine (3) au réseau (5) via le contacteur (4) ;
- commander le convertisseur (2) suite à une détection de l'instant où le contacteur (4) se ferme, afin d'interrompre son fonctionnement,
**caractérisé en ce que** la détection de l'instant où le contacteur (4) se ferme comprend la mesure d'au moins un courant (I_{L1}, I_{L2}, I_{L3}) circulant à travers le contacteur (4) fermé, l'instant où le contacteur (4) se ferme étant détecté lorsque la valeur absolue de l'intensité du courant (I_{L1}, I_{L2}, I_{L3}) est supérieure ou égale à un seuil prédéfini, ce seuil étant préférentiellement supérieur au plancher de bruit de la chaîne de mesure.

12. Installation électrique (1) comportant le système (20) selon la revendication précédente, le convertisseur (2) et le contacteur (4).

13. Installation selon la revendication précédente, comportant la machine électrique (3).

14. Utilisation du système selon la revendication 11 pour la mise en œuvre du procédé selon l'une quelconque des revendications 1 à 10.

## Patentansprüche

1. Verfahren zum Steuern des Anschlusses einer elektrischen Maschine (3) an ein Stromnetz (5) über ein Bypass-Schütz (4) und des Betriebs eines Umrichters (2), über den die Maschine (3) mit dem Netz (5) verbunden ist, ausgehend von einem Zustand, in dem die Maschine (3) über den Umrichter (2) an das Netz angeschlossen ist, ohne dass dessen Ausgangsspannung mit der des Netzes (5) synchronisiert ist, wobei das Verfahren Folgendes aufweist:
a) die Steuerung des Umrichters (2), um dessen Ausgangsspannung mit der des Netzes (5) zu synchronisieren;
b) die Steuerung des Schützes (4), um die Maschine (3) über das Schütz (4) an das Netz (5) anzuschließen;
c) die Steuerung des Umrichters (2) nach Erfassung des Zeitpunkts, zu dem das Schütz (4) schließt, um dessen Betrieb zu unterbrechen; **dadurch gekennzeichnet, dass** die Erfassung des Zeitpunkts, zu dem das Schütz (4) schließt, die Messung mindestens eines durch das geschlossene Schütz (4) fließenden Stroms (I_{L1}, I_{L2}, I_{L3}) beinhaltet, wobei der Zeitpunkt, zu dem das Schütz (4) schließt, erfasst wird, wenn der Absolutwert der Stromstärke (I_{L1}, I_{L2}, I_{L3}) größer oder gleich einem vordefinierten Schwellenwert ist, wobei dieser Schwellenwert vorzugsweise über dem Rauschpegel der Messkette liegt.

2. Verfahren nach dem vorhergehenden Anspruch, wobei das Stromnetz (5) dreiphasig ist.

3. Verfahren nach den beiden vorhergehenden Ansprüchen, wobei der Zeitpunkt, zu dem das Schütz (4) schließt, erfasst wird, wenn der Absolutwert der maximalen Stromstärke (I_{L1}, I_{L2}, I_{L3}) in einer der drei Phasen, die über das geschlossene Schütz (4) fließt, größer oder gleich dem vordefinierten Schwellenwert ist.

4. Verfahren nach einem der vorhergehenden Ansprüche, wobei der Umrichter (2) einen mit der Maschine (3) verbundenen Wechselrichter (22) aufweist, der H-förmige Transistorbrücken (220) enthält.

5. Verfahren nach einem der vorhergehenden Ansprüche, wobei die Maschine (3) ein Generator ist.

6. Verfahren nach einem der Ansprüche 1 bis 4, wobei die Maschine (3) eine rotierende oder passive Last ist, insbesondere ein Elektromotor oder ein kinetischer Energiespeicher.

7. Verfahren nach dem vorhergehenden Anspruch in Verbindung mit Anspruch 4, wobei der Umrichter (2) ein Drehzahlregler ist, der einen Gleichrichter (21) aufweist, über den das Netz mit dem Wechselrichter (22) verbunden ist.

8. Verfahren nach dem vorhergehenden Anspruch, wobei der Gleichrichter (21) ein gemischter passiver Gleichrichter mit Dioden (211) und gesteuerten Schaltern, insbesondere Thyristoren (210), ist.

9. Verfahren nach Anspruch 4 oder einem der Ansprüche 5 bis 8 in Verbindung mit Anspruch 4, wobei der Schritt c) das Sperren der Transistoren (220) des Wechselrichters (22) beinhaltet, insbesondere durch das Abschalten der Steuersignale an den Gates dieser Transistoren, bei denen es sich beispielsweise um PWM-Signale handelt.

10. Verfahren nach einem der vorhergehenden Ansprüche, wobei das Verhältnis zwischen der Verarbeitungszeit des Stoppbefehls für den Umrichter (2) und der Schaltperiode des Umrichters (2) kleiner als 0,5, besser kleiner als 0,2, noch besser kleiner als 0,1 ist, und vorzugsweise die Verarbeitungszeit des Stoppbefehls für den Umrichter (2) weniger als 50 µs bei einer Schaltfrequenz des Umrichters (2) von weniger als 10 kHz beträgt.

11. System (20) zum Steuern des Anschlusses einer elektrischen Maschine (3) an ein Stromnetz (5) über ein Bypass-Schütz (4) und des Betriebs eines Umrichters (2), über den die Maschine (3) mit dem Netz (5) verbunden ist, ausgehend von einem Zustand, in dem die Maschine (3) über den Umrichter (2) an das Netz angeschlossen ist, ohne dass dessen Ausgangsspannung mit der des Netzes (5) synchronisiert ist, wobei das System (20) dazu ausgelegt ist:
- den Umrichter (2) so zu steuern, dass dessen Ausgangsspannung mit der des Netzes (5) synchronisiert wird;
- das Schütz (4) so zu steuern, dass die Maschine (3) über das Schütz (4) an das Netz (5) angeschlossen wird;
- den Umrichter (2) nach Erfassung des Zeitpunkts, zu dem das Schütz (4) schließt, so zu steuern, dass dessen Betrieb unterbrochen wird;
**dadurch gekennzeichnet, dass** die Erfassung des Zeitpunkts, zu dem das Schütz (4) schließt, die Messung mindestens eines durch das geschlossene Schütz (4) fließenden Stroms (I_{L1}, I_{L2}, I_{L3}) beinhaltet, wobei der Zeitpunkt, zu dem das Schütz (4) schließt, erfasst wird, wenn der Absolutwert der Stromstärke (I_{L1}, I_{L2}, I_{L3}) größer oder gleich einem vordefinierten Schwellenwert ist, wobei dieser Schwellenwert vorzugsweise über dem Rauschpegel der Messkette liegt.

12. Elektrische Anlage (1) mit dem System (20) nach dem vorhergehenden Anspruch, dem Umrichter (2) und dem Schütz (4).

13. Anlage nach dem vorhergehenden Anspruch mit der elektrischen Maschine (3).

14. Verwendung des Systems nach Anspruch 11 zur Durchführung des Verfahrens nach einem der Ansprüche 1 bis 10.

## Claims

1. Method for controlling the connection of an electric machine (3) to an electrical grid (5) via a bypass contactor (4) and the operation of a converter (2) by which the machine (3) is connected to the grid (5), from a state where the machine (3) is connected to the grid via the converter (2) without the output voltage of the latter being synchronized with that of the grid (5), the method comprising:
a) controlling the converter (2) in order to synchronize the output voltage thereof with that of the grid (5);
b) controlling the contactor (4) in order to connect the machine (3) to the grid (5) via the contactor (4);
c) controlling the converter (2) following a detection of the instant when the contactor (4) closes, in order to interrupt its operation,
**characterized in that** the detection of the instant when the contactor (4) closes comprises measuring at least one current (I_{L1}, I_{L2}, I_{L3}) flowing through the closed contactor (4), the instant when the contactor (4) closes being detected when the absolute value of the intensity of the current (I_{L1}, I_{L2}, I_{L3}) is above or at a predefined threshold, this threshold preferably being above the noise floor of the measurement chain.

2. Method according to the preceding claim, the electrical grid (5) being three-phase.

3. Method according to the two preceding claims, the instant when the contactor (4) closes being detected when the absolute value of the maximum intensity of the current (I_{L1}, I_{L2}, I_{L3}) in one of the three phases flowing through the closed contactor (4) is above or at the predefined threshold.

4. Method according to any one of the preceding claims, the converter (2) including an inverter (22) connected to the machine (3) and comprising H-bridges of transistors (220).

5. Method according to any one of the preceding claims, the machine (3) being a generator.

6. Method according to any one of Claims 1 to 4, the machine (3) being a rotating or passive load, notably an electric motor or a kinetic energy accumulator.

7. Method according to the preceding claim when dependent on Claim 4, the converter (2) being a variable speed drive comprising a DC rectifier (21) via which the grid is connected to the inverter (22).

8. Method according to the preceding claim, the rectifier (21) being a mixed passive rectifier with diodes (211) and controlled switches, notably thyristors (210).

9. Method according to Claim 4 or any one of Claims 5 to 8 when dependent on Claim 4, step c) comprising blocking the transistors (220) of the inverter (22), notably by cutting off the signals for controlling the gates of these transistors, which are, for example, PWM signals.

10. Method according to any one of the preceding claims, the ratio between the time to process the order to stop the converter (2) and the chopping period of the converter (2) being below 0.5, better still below 0.2, even better still below 0.1, and preferably the time to process the order to stop the converter (2) is below 50 µs for a chopping frequency of the converter (2) below 10 kHz.

11. System (20) for controlling the connection of an electric machine (3) to an electrical grid (5) via a bypass contactor (4) and the operation of a converter (2) by which the machine (3) is connected to the grid (5), from a state where the machine (3) is connected to the grid via the converter (2) without the output voltage of the latter being synchronized with that of the grid (5), the system (20) being arranged to:
- control the converter (2) in order to synchronize the output voltage thereof with that of the grid (5);
- control the contactor (4) in order to connect the machine (3) to the grid (5) via the contactor (4);
- control the converter (2) following a detection of the instant when the contactor (4) closes, in order to interrupt its operation, **characterized in that** the detection of the instant when the contactor (4) closes comprises measuring at least one current (I_{L1}, I_{L2}, I_{L3}) flowing through the closed contactor (4), the instant when the contactor (4) closes being detected when the absolute value of the intensity of the current (I_{L1}, I_{L2}, I_{L3}) is above or at a predefined threshold, this threshold preferably being above the noise floor of the measurement chain.

12. Electrical installation (1) comprising the system (20) according to the preceding claim, the converter (2) and the contactor (4).

13. Installation according to the preceding claim, comprising the electric machine (3).

14. Use of the system according to Claim 11 to implement the method according to any one of Claims 1 to 10.
